# FASCICULE DE BREVET EUROPEEN

(11) **EP 4 072 926 B1**
(45) Date de publication et mention de la délivrance du brevet: **11.06.2025**
(21) Numéro de dépôt: 20816555.5
(22) Date de dépôt: 06.11.2020
(51) Int. Cl.: B62D 25/08, B62D 27/02

(54) **DISPOSITIF DE FIXATION SUR UN CHÂSSIS DE VÉHICULE AUTOMOBILE, DE L'EXTRÉMITÉ ARRIÈRE DE BRANCARDS D'UN BERCEAU MOTEUR RECEVANT UNE MOTORISATION ÉLECTRIQUE DE PROPULSION DU VÉHICULE**
VORRICHTUNG ZUR BEFESTIGUNG DES HINTEREN ENDES DER SEITENSCHIENEN EINES EIN ANTRIEBSSYSTEM EINES FAHREUGS MIT ELEKTROANTRIEB AUFNEHMENDEN MOTORTRÄGERS AN EINEM FAHRZEUGCHASSIS
DEVICE FOR ATTACHING, TO A MOTOR VEHICLE CHASSIS, THE REAR END OF THE SIDE RAILS OF AN ENGINE CRADLE RECEIVING AN ELECTRIC DRIVE VEHICLE PROPULSION SYSTEM

(30) Priorité: 09.12.2019 FR 1913962
(43) Date de publication de la demande: 19.10.2022
(73) Titulaire: Stellantis Auto SAS, 78300 Poissy (FR)
(72) Inventeur: BREAL, Ronan, 25200 BETHONCOURT (FR); ROBERT, Cedric, 70400 HERICOURT (FR)
(74) Mandataire: BCIP
(86) Numéro de dépôt international: PCT/FR2020/052030
(87) Numéro de publication internationale: WO 2021/116547

(56) Documents cités:
- EP-A1- 1 277 648
- EP-A1- 1 306 289
- EP-A1- 2 497 699
- EP-A2- 1 314 632
- JP-A- 2005 231 477
- JP-A- 2009 018 724

## Description

### Domaine technique de l'invention

La présente invention revendique la priorité de la demande française 1913962 déposée le 09 Décembre 2019.

L'invention relève du domaine des châssis que comporte un véhicule automobile, dans le contexte d'un véhicule automobile dont l'énergie de propulsion est en tout ou partie électrique en étant fournie à partir d'une réserve d'énergie électrique équipant le véhicule. Dans le cadre de contraintes liées à un tel contexte, l'invention concerne plus particulièrement des modalités de protection du châssis à l'encontre de sa déformation en cas d'un choc frontal supporté par le véhicule.

### Art antérieur

Il est dès à présent précisé les notions relatives couramment utilisées pour définir un véhicule automobile, ainsi que ses composants et/ou les positions relatives des composants du véhicule les uns par rapport aux autres. Par la suite, de telles notions relatives sont utilisées pour exposer le contexte de l'invention et aborder les problèmes posés qui en découlent, ainsi que pour décrire l'invention.

Pour cela et sauf précision contraire, il est fait référence à un repère orthonormé identifiant classiquement les directions d'extension du véhicule, dont une direction longitudinale s'étendant entre l'avant et l'arrière du véhicule, une direction transversale s'étendant entre les côtés latéraux droit et gauche du véhicule identifiés par rapport au conducteur en station de conduite du véhicule, et une direction verticale identifiant l'extension du véhicule en élévation de bas en haut depuis son plan de roulage au sol. Par suite, un longeron s'étend principalement longitudinalement. Les notions comme bas et haut, ou autres notions relatives apparentées comme supérieur et inférieur ou comme dessous ou sous et dessus, ou encore comme surplomb et contrebas, sont définies suivant l'extension verticale du véhicule en élévation par rapport à son plan de roulage au sol.

Les véhicules automobiles comportent un châssis constitutif d'une armature de rigidification du véhicule. Le châssis ménage entre autre un soubassement du véhicule qui est configuré en une ossature couramment composée de longerons entretoisés par des traverses. Une plateforme est couramment installée sur l'ossature, en interposition verticale entre le soubassement et l'habitacle du véhicule.

Classiquement, les longerons comprennent au moins des longerons latéraux droit et gauche, et au moins un longeron médian qui est interposé sous la plateforme transversalement entre les longerons latéraux. Il est courant que le châssis comporte plusieurs dits longerons médians, dont l'un au moins est potentiellement agencé en .tunnel. Les traverses comprennent au moins une traverse de façade avant disposée à l'avant du véhicule et une traverse avant interfacée entre un compartiment moteur et l'habitacle du véhicule. Il est habituel que plusieurs traverses médianes soient réparties longitudinalement entre la traverse avant et une traverse arrière du châssis. La traverse de façade avant et la traverse avant délimitent entre elles le compartiment moteur recevant la motorisation du véhicule, un tablier d'extension verticale et transversale séparant le compartiment moteur de l'habitacle du véhicule.

Par ailleurs parmi les véhicules automobiles, une évolution de leur motorisation a poussé les concepteurs à développer des véhicules dont l'énergie de propulsion est au moins en partie à énergie électrique. La motorisation du véhicule est logée à l'intérieur du compartiment moteur, en étant couramment installée sur un berceau moteur. Le berceau moteur est fixé d'une part à son extrémité avant à la traverse de façade avant et d'autre part à la traverse avant via l'extrémité arrière de brancards d'extension longitudinale.

Pour fournir l'énergie électrique de propulsion du véhicule, le véhicule est équipé d'une réserve d'énergie électrique couramment composée de modules de batteries qui peuvent être avantageusement installés sous la plateforme s'étendant sous l'habitacle du véhicule. La capacité de stockage en énergie de la réserve d'énergie électrique peut ainsi être optimisée, ce qui permet finalement d'accroître l'autonomie du véhicule en énergie électrique de propulsion.

Cependant la recherche d'une optimisation de la capacité de stockage en énergie de la réserve d'énergie électrique, induit une augmentation de son volume global. Il est dès lors opportun que la réserve d'énergie électrique s'étende au mieux sous la plateforme suivant son plan d'extension longitudinal et transversal.

Ceci pose alors la difficulté de l'installation d'une réserve d'énergie électrique présentant un volume conséquent sous la plateforme. C'est pourquoi, il est connu de libérer au mieux l'espace disponible sous la plateforme de tout encombrement, pour permettre et/ou faciliter l'installation sous la plateforme d'une réserve d'énergie électrique présentant un volume conséquent. A cet effet, la présence de longerons et/ou de traverses s'étendant sous la plateforme est souhaitable, tel qu'il ressort par exemple du document EP2468609-B1 (TESLA MOTORS Inc).

Les documents EP 2 497 699 A1, JP2009018724, JP2005231477, EP1306289 et EP1277648 décrivent des châssis de véhicule comportant un dispositif de fixation avec une interface de jonction comprenant au moins un premier organe de jonction fixé d'une part longitudinalement à l'extrémité arrière d'un brancard via une extrémité avant que comporte le premier organe de jonction, et d'autre part transversalement à un longeron latéral constitutif du châssis via une extrémité arrière que comporte le premier organe de jonction. Selon le document EP2468609-B1, le châssis est exempt de longerons médians et de traverses médianes sous la plateforme. L'espace disponible sous la plateforme est ainsi optimisé pour l'installation d'une réserve d'énergie électrique modulaire pouvant présenter un volume conséquent. La réserve d'énergie électrique est montée à l'intérieur d'un cadre via lequel la réserve d'énergie est installée sous la plateforme. Le cadre incorpore des éléments transversaux de rigidification qui sont longitudinalement répartis à l'intérieur du cadre et entre lesquels sont installés des modules composant la réserve d'énergie électrique. Le cadre transversalement rigidifié prend alors appui contre les longerons latéraux du châssis pour pallier à la suppression desdits longerons médians et de dites traverses médianes qui s'étendent habituellement sous la plateforme.

Cependant, le châssis s'en trouve alors fragilisé suivant son extension longitudinale. Il est dès lors constaté qu'une telle fragilisation longitudinale du châssis affecte sa résistance en cas de choc frontal supporté par le véhicule, au détriment d'une protection satisfaisante des passagers du véhicule. Il en ressort qu'il est alors utile de rechercher une solution pour renforcer le châssis vis-à-vis d'un choc frontal supporté par le véhicule, par suite d'une absence de dits longerons médians s'étendant sous la plateforme pour optimiser le volume de la réserve d'énergie électrique.

### Présentation de l'invention

Dans ce contexte l'invention a pour objet un dispositif de fixation sur un châssis de véhicule automobile, de l'extrémité arrière de brancards droit et gauche que comporte un berceau moteur monté sur le châssis. L'invention a aussi pour objet un châssis de véhicule automobile équipé d'un dit berceau moteur, dont les extrémités arrière desdits brancards qu'il comporte sont fixées au châssis via un dispositif de fixation conforme à l'invention. L'invention a aussi pour objet un véhicule automobile comportant un châssis conforme à l'invention, dont la motorisation est au moins en partie à énergie électrique. Il est compris ici que le véhicule de l'invention est susceptible d'être un véhicule couramment qualifié électrique dont l'énergie propulsive est exclusivement électrique, ou d'être un véhicule couramment qualifié hybride dont l'énergie de propulsion est fournie par une motorisation électrique et/ou par une motorisation par combustion.

Le but de l'invention est de proposer une solution concernant les modalités de fixation de l'extrémité arrière des brancards sur le châssis, qui soit apte à contenir une déformation du châssis en cas de choc frontal supporté par le véhicule suffisamment efficace pour protéger le ou les passagers du véhicule.

Un objectif de l'invention est de proposer une telle solution qui pallie à une absence partielle ou totale sous une plateforme d'un soubassement du châssis, d'éléments de rigidification du châssis notamment longitudinalement. Tel que précédemment visé, une telle absence d'éléments de rigidification est souhaitée pour optimiser l'espace disponible sous la plateforme pouvant recevoir une réserve d'énergie électrique fournissant au moins une énergie électrique propulsive du véhicule.

Un autre objectif de l'invention est de proposer une telle solution en limitant l'accroissement de la masse du véhicule induit par les modalités de fixation de l'extrémité arrière des brancards sur le châssis, pour préserver au mieux les ressources et donc l'autonomie du véhicule en énergie propulsive.

Un autre objectif de l'invention est de proposer une telle solution pouvant être mise en œuvre sous contrainte d'un aménagement d'une structure de châssis préexistante. Il est notamment visé de limiter au mieux l'impact d'un tel aménagement sur le processus de fabrication de ladite structure de châssis préexistante, de manière à permettre l'utilisation d'une même ligne d'assemblage pour fabriquer ladite structure de châssis préexistante sélectivement avec ou sans son aménagement nécessaire à la mise en œuvre de l'invention. Un tel but s'inscrit notamment sous contrainte d'une recherche de réduction des coûts liés à la solution recherchée, dans le contexte d'une concurrence économique sévère dans le domaine automobile pouvant rendre rédhibitoire une solution potentielle en raison des coûts induits.

Selon l'invention et pour chacun des brancards, le dispositif de fixation comporte une interface de jonction comprenant au moins un premier organe de jonction fixé d'une part longitudinalement à l'extrémité arrière du brancard via une extrémité avant que comporte le premier organe de jonction, et d'autre part transversalement à un longeron latéral constitutif du châssis via une extrémité arrière que comporte le premier organe de jonction. Il est compris que le dispositif de fixation comprend deux interfaces de jonction droite et gauche qui sont respectivement affectées aux extrémités arrière des brancards comprenant couramment un brancard droit et un brancard gauche. Le premier organe de jonction loge au moins un premier organe de renfort reliant entre elles l'extrémité avant et l'extrémité arrière du premier organe de jonction. Le premier organe de renfort est transversalement étendu en étant arqué suivant un plan transversal-longitudinal entre l'extrémité avant et l'extrémité arrière du premier organe de jonction. Selon une forme de réalisation du premier organe de jonction favorisant son efficacité, le premier organe de renfort comprend :
- ) un premier profilé d'extension verticale fixé au premier organe de jonction en s'étendant entre l'extrémité avant et l'extrémité arrière du premier organe de jonction,
- ) une aile de renfort d'extension verticale et à bord supérieur rabattu qui est issue de la matière du premier organe de jonction. Ladite aile de renfort s'étend à distance transversale dudit premier profilé et en bordure du premier organe de jonction, à son bord qui est transversalement orienté du côté intérieur du châssis. Tel que communément définies dans le domaine automobile, les notions relatives d'orientation intérieure et d'orientation extérieure par rapport au châssis sont notamment appliquées à la position relative entre deux objets, tel que notamment dans le cas d'espèce entre ledit premier profilé et ladite aile de renfort.
- ) un deuxième profilé s'étendant longitudinalement au moins partiellement à l'intérieur du volume délimité entre ledit premier profilé et ladite aile de renfort, le deuxième profilé étant fixé en appuis transversalement antagonistes contre ledit premier profilé et ladite aile de renfort.

Chacun des premiers organes de jonction est plus particulièrement formé d'un corps monobloc, potentiellement composé de plusieurs éléments solidarisés entre eux. L'extension transversale et l'extension longitudinale dudit corps monobloc sont plus spécifiquement bornées entre l'extrémité arrière du brancard et une zone d'accostage du dit corps monobloc contre le longeron latéral. Le premier organe de jonction est par exemple formé d'une tôle mise en forme par emboutissage et/ou autre façonnage, qui s'étend entre l'extrémité avant et l'extrémité arrière de l'organe de jonction. De préférence tel que visé plus loin, ladite tôle est renforcée par un ou plusieurs renforts assemblés entre eux, composant alors un premier organe de renfort solidarisé à la tôle en participant dudit corps monobloc constitutif du premier organe de jonction.

Les brancards sont transversalement disposés entre les côtés latéraux droit et gauche du châssis, en étant transversalement décalés par rapport aux longerons latéraux du châssis. Chacune des deux interfaces de jonction est conforme aux aménagements prévus par l'invention, sans exclure la possibilité d'être différentes l'une de l'autre selon le cas d'espèce d'application de l'invention.

En cas de chocs frontal supporté par le châssis, un effort de poussée longitudinale généré par le choc est transmis via le premier organe de jonction depuis les brancards vers les longerons latéraux qui leurs sont respectivement affectés. Ceci conforte la résistance du châssis à l'encontre de sa déformation en cas de choc frontal, par transmission de l'effort de poussée longitudinale supporté par le berceau moteur aux longerons latéraux, via les brancards qui sont reliés aux longerons latéraux par les premiers organes de jonction qui leur sont affectés.

Il est ainsi permis d'éviter une installation d'organes de renfort longitudinaux sous une plateforme du soubassement du châssis, qui s'étend notamment sous l'habitacle du véhicule à l'arrière du compartiment moteur qui loge le berceau moteur et qui est ménagé à l'avant du châssis. Ceci permet finalement d'optimiser l'espace disponible sous la plateforme pour la réception d'une réserve d'énergie électrique au moins propulsive du véhicule.

Le premier organe de jonction s'étend notamment en contrebas du brancard et présente une partie médiane interposée entre l'extrémité avant et l'extrémité arrière du premier organe de jonction. Ladite partie médiane ménage un décalage transversal entre l'extrémité avant et l'extrémité arrière du premier organe de jonction.

La notion de contrebas est comprise comme une extension du premier organe de jonction à un niveau inférieur du brancard qui lui est affecté, sans signifier une extension sous le brancard. En effet, le premier organe de jonction s'étend en contrebas du brancard depuis son extrémité avant fixée à l'extrémité arrière du brancard vers son extrémité arrière fixée au longeron latéral.

Le premier organe de jonction est potentiellement plus ou moins verticalement incliné depuis son extrémité avant vers son extrémité arrière. Il est compris par l'expression "plus ou moins" que ladite inclinaison est notamment dépendante de l'écart vertical entre l'extrémité arrière du brancard et le longeron latéral auxquels le premier organe de jonction est fixé, selon le cas d'espèce d'application de l'invention.

Plus particulièrement, l'extrémité avant et l'extrémité arrière du premier organe de jonction présente chacune une extension longitudinale et sont reliées l'une à l'autre par ladite partie médiane. Ladite partie médiane s'étend longitudinalement et transversalement, en comportant une double inflexion ménageant ledit décalage transversal entre l'extrémité arrière et l'extrémité avant du premier organe de jonction.

L'agencement de la partie médiane du premier organe de jonction relie entre elles l'extrémité avant et l'extrémité arrière du premier organe de jonction, de sorte que ledit décalage transversal est ménagé entre elles. Le décalage transversal entre l'extrémité avant et l'extrémité arrière du premier organe de jonction réalisé via sa partie médiane, permet de compenser ledit écart transversal entre le brancard et le longeron latéral auxquels le premier organe de jonction est fixé, tout en permettant une transmission dudit effort de poussée longitudinale depuis le brancard vers le longeron latéral.

Le premier organe de renfort conforte la robustesse intrinsèque du premier organe de jonction à l'encontre de sa déformation en cas de choc frontal supporté par le châssis. Le premier organe de renfort favorise aussi le transfert depuis l'extrémité avant vers l'extrémité arrière du premier organe de jonction, de l'effort de poussée longitudinale généré en cas de choc frontal supporté par le châssis.

De préférence, le premier organe de jonction comprend une première coque qui comporte un fond rehaussé de parois de bordure d'extension verticale, le fond de la première coque étant délimité entre une première paroi de bordure et une deuxième paroi de bordure. Plus précisément, le fond de la première coque est délimité entre les parois de bordure, de sorte qu'un volume intérieur de la coque ménage un espace de réception au moins du premier organe de renfort. La première coque forme de préférence un corps monobloc par assemblage des composants du premier organe de renfort entre eux et à la première coque. Selon une forme de réalisation, un bord du fond de la première coque est délimité entre la première paroi de bordure et une deuxième dite paroi de bordure. Ledit bord du fond de la première coque, notamment d'extension longitudinale, est transversalement plaqué contre le longeron latéral, en étant longitudinalement bordé d'une aile de fixation du premier organe de jonction verticalement sous longeron latéral.

Selon une forme de réalisation, une première patte de fixation du premier organe de jonction à l'extrémité arrière du brancard est ménagée à l'extrémité avant du premier organe de jonction entre la première paroi de bordure et la deuxième paroi de bordure. La deuxième paroi de bordure est munie d'une deuxième patte de fixation du premier organe de jonction à son extrémité arrière, transversalement contre une face latérale du longeron latéral.

Plus spécifiquement, l'aile de renfort est constituée de ladite deuxième paroi de bordure que comprend la première coque. Ledit premier profilé constitutif du premier organe de renfort est accosté à son extrémité arrière contre ladite aile de renfort, à l'avant de la deuxième patte de fixation.

Selon une forme de réalisation, les interfaces de jonction respectivement affectées aux brancards comprennent en outre chacune un deuxième organe de jonction qui est transversalement interfacé entre le premier organe de jonction et un sabot transversalement médian équipant le châssis. Les deuxièmes organes de jonction respectifs des interfaces de jonction sont transversalement accostés respectivement de part et d'autre du sabot.

Les deuxièmes organes de jonction forment dans ce cas, entre autres potentielles fonctionnalités, des organes d'amortissement d'un effort transversal de poussée. Un tel effort transversal de poussée peut résulter d'une éventuelle composante de poussée transversale de l'effort de poussée qui est appliqué à l'avant du châssis en cas de choc frontal qu'il subi, notamment en cas de choc frontal-latéral appliqué à l'avant du véhicule. De préférence et pour chacune des interfaces de jonction, le premier organe de jonction et le deuxième organe de jonction sont transversalement aboutés l'un contre l'autre en formant conjointement un corps monobloc. Le corps monobloc formé par le premier organe de jonction et le deuxième organe de jonction est de préférence réalisé par leur assemblage entre eux. Par exemple, le premier organe de jonction et le deuxième organe de jonction sont transversalement accostés et fixés l'un à l'autre via des peignes d'emboîtement qu'ils comportent respectivement.

Plus particulièrement selon une forme de réalisation, le deuxième organe de jonction est agencé en une deuxième coque d'extension longitudinale et transversale, qui loge de préférence au moins un deuxième organe de renfort. Ladite aile de renfort ménage avantageusement une cloison de séparation entre le volume intérieur de la première coque et le volume intérieur de la deuxième coque, l'aile de renfort participant à la rigidification de la deuxième coque.

L'invention aussi pour objet un véhicule automobile comportant un châssis sur lequel sont fixées les extrémités arrière respectives de brancards droit et gauche que comporte un berceau moteur monté sur le châssis. Le véhicule de l'invention est reconnaissable en ce que les extrémités arrière des brancards sont fixées au châssis via un dispositif de fixation conforme à l'invention.

### Présentation des figures

L'invention sera mieux comprise à la lecture de la description détaillée qui suit d'un exemple de réalisation de la présente invention, en relation avec les figures suivantes des planches annexées :

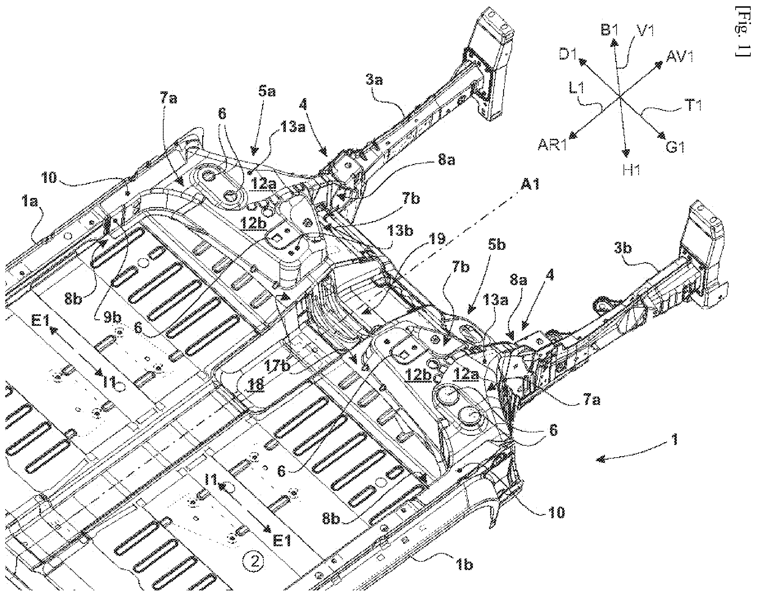

[Fig. 1] La figure 1 est une illustration partielle en perspective vu de dessous, d'un soubassement de châssis d'un véhicule automobile. La figure 1 représente plus particulièrement un dispositif de fixation sur le châssis d'extrémités arrière de brancards respectivement droit et gauche que comporte un berceau moteur monté sur le châssis, via des interfaces de jonction droite et gauche.

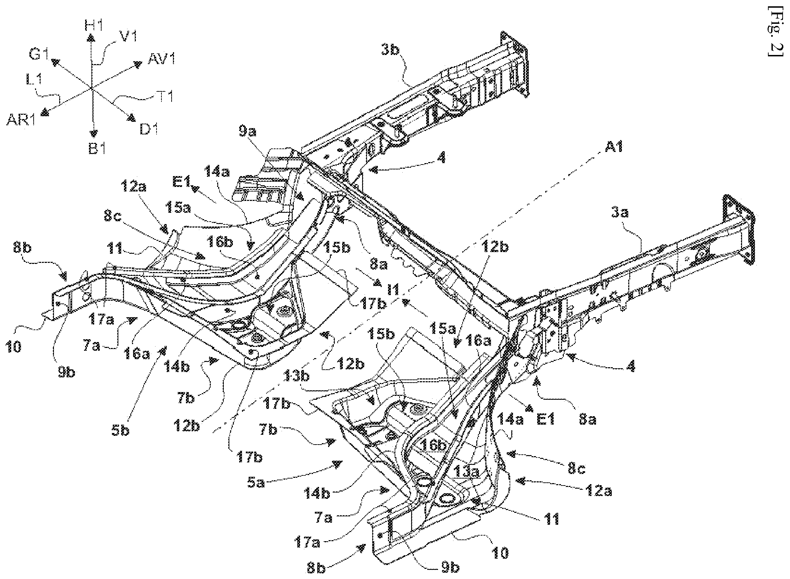

[Fig. 2] La figure 2 est une illustration en perspective vus de dessus, des brancards représentés sur la figure 1. Sur la figure 2, les interfaces de jonction droite et gauche que comprend le dispositif de fixation illustré sur la figure 1, sont respectivement fixées aux extrémités arrière des brancards droit et gauche.

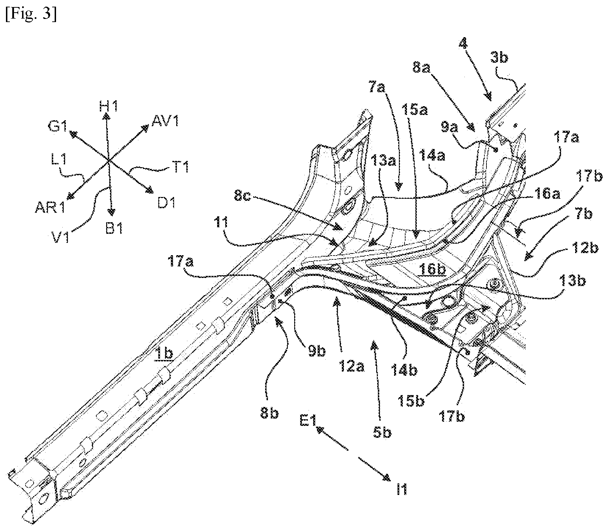

[Fig. 3] La figure 3 est une illustration partielle en perspective vue de dessus, d'une interface de jonction gauche représentée sur les figures 1 et 2. Sur la figure 3, l'interface de jonction gauche est interfacée entre l'extrémité arrière d'un brancard gauche représenté sur les figures 1 et 2 et un longeron latéral gauche que comprend le châssis.

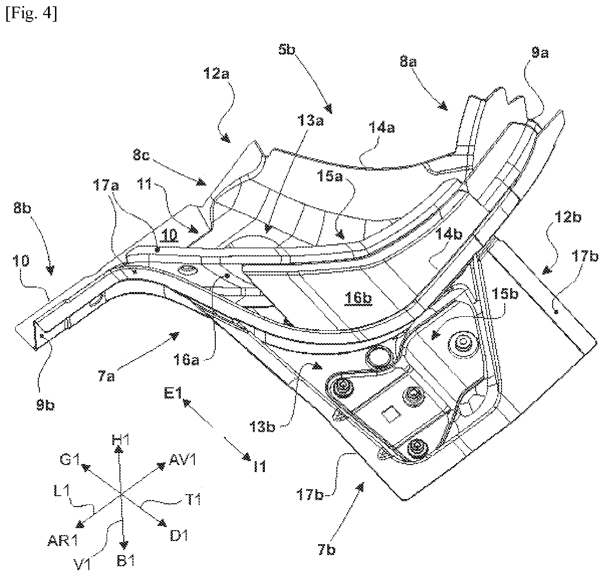

[Fig. 4] La figure 4 est une illustration en perspective vue de dessus de l'interface de jonction gauche représentée sur les figures 1 à 3, composé d'un premier organe de jonction et d'un deuxième organe de jonction qui sont transversalement aboutés et fixés l'un à l'autre.

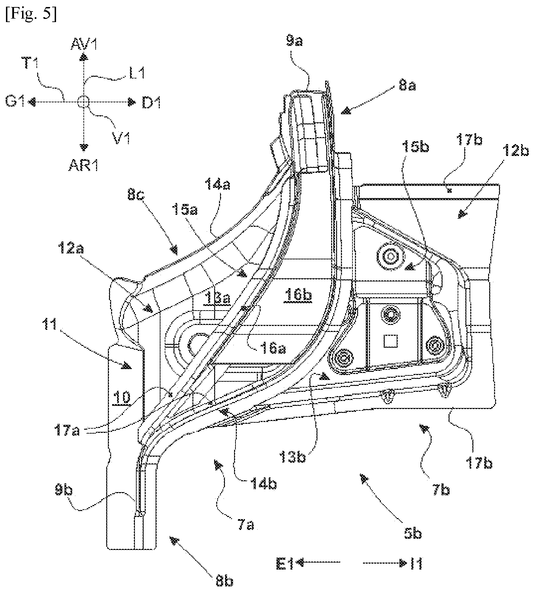

[Fig. 5] La figure 5 est une illustration vue de dessus de l'interface de jonction gauche représentée sur les figures 1 à 4.

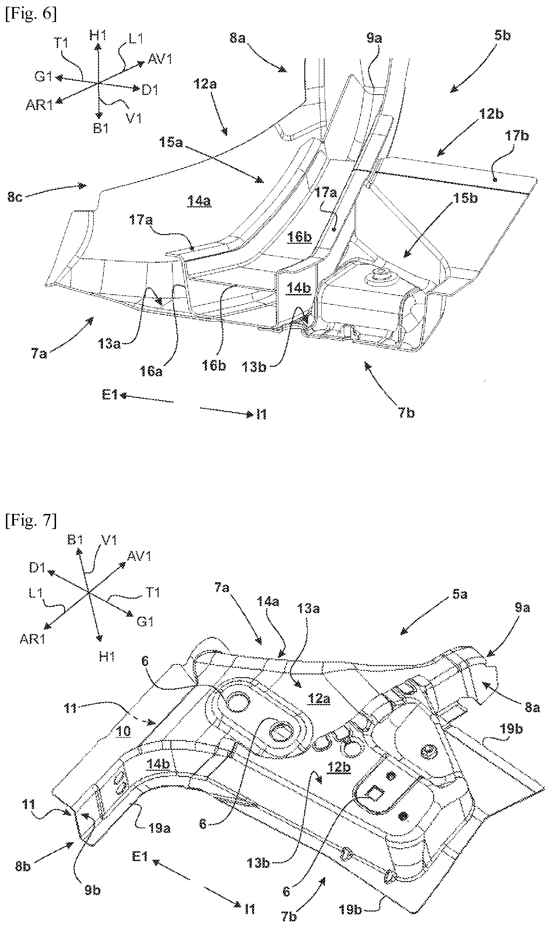

[Fig. 6] La figure 6 est une illustration en perspective vue de dessus de l'interface de jonction gauche représentée sur les figures 1 à 5. Sur la figure 6, l'interface de jonction est représentée tronquée transversalement à son extrémité arrière, pour illustrer plus précisément des organes de renfort dont elle est pourvue.
[Fig. 7] La figure 7 est une illustration en perspective vue de dessous de l'interface de jonction droite représentée sur les figures 1 à 3. Les interfaces de jonction étant identiques en étant installées symétriquement sur le châssis, l'illustration de dessous de l'interface de jonction droite est en concordance avec l'illustration de dessus de l'interface de jonction gauche.

### Description détaillée de l'invention

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite. Par ailleurs pour éviter une surcharge des figures et faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

Sur les figures, il est fait référence à un repère orthonormé couramment utilisé dans le domaine automobile pour définir un véhicule, ses composants et/ou les positions relatives des composants du véhicule les uns par rapport aux autres.

Selon ce repère orthonormé, le véhicule s'étend longitudinalement L1 entre l'avant AV1 et l'arrière AR1, transversalement T1 entre ses côtés latéraux droit DR1 et gauche G1, et verticalement V1 en élévation par rapport au plan de roulage du véhicule, depuis le bas B1 vers le haut H1 du véhicule.

Sur la figure 1, un soubassement de châssis 1 d'un véhicule automobile est représenté vu de dessous. Le soubassement comprend des longerons latéraux 1a, 1b respectivement droit et gauche entre lesquels s'étend une plateforme 2. Un espace dégagé est ménagé sous la plateforme 2 pour l'installation d'une réserve d'énergie électrique fournissant notamment l'énergie électrique de propulsion du véhicule. La motorisation propulsive du véhicule est installée à l'intérieur d'un compartiment moteur avant du véhicule, en étant soutenue par un berceau moteur fixé au châssis 1 à son extrémité avant et à son extrémité arrière.

En se reportant aussi à la figure 2, le berceau moteur comporte un brancard droit 3a et un brancard gauche 3b qui sont fixés au châssis 1 via leur extrémité arrière 4. Il est proposé par l'invention un dispositif de fixation de l'extrémité arrière 4 des brancards 3a, 3b sur le châssis 1, via des interfaces de jonction 5a, 5b. Plus spécifiquement, une interface de jonction gauche 5b procure une fixation de l'extrémité arrière 4 du brancard gauche 3b à un longeron latéral 1b gauche du châssis 1, comme représenté sur la figure 3, et une interface de jonction droite 5a procure de manière analogue une fixation de l'extrémité arrière 4 du brancard droit 3a à un longeron latéral droit 1a du châssis 1.

Selon l'exemple illustré, l'interface de jonction gauche 5b et l'interface de jonction droite 5a sont identiques en étant installées symétriquement sur le châssis 1 par rapport à un axe longitudinal A1 transversalement médian d'extension du châssis 1. L'agencement des interfaces de fixation 5a, 5b ne fait pas obstacle à leur façonnage pour recevoir des organes de ferrage, tel que par exemple des repères 6 pour leur pilotage, qui sont utilisés lors de l'assemblage des composants du châssis 1 sur une chaîne de production du véhicule préexistante. Un châssis 1 conforme aux dispositions de l'invention peut ainsi être manipulé sur une chaîne d'assemblage de véhicules différentiés qui présentent néanmoins des bases roulantes identiques.

Tel que plus visible sur les figures 1 à 7, chacune des interfaces de jonction 5a, 5b comprend un premier organe de jonction 7a et un deuxième organe de jonction 7b qui sont transversalement aboutés et fixés l'un à l'autre.

Plus particulièrement visible sur la figure 2, les interfaces de jonction droite 5a et gauche 5b, et donc les premiers organes de jonction 7a et les deuxièmes organes de jonction 7b qu'elles comprennent respectivement, s'étendent en contrebas des brancards 3a, 3b. Les interfaces de jonction 5a, 5b s'étendent notamment à l'arrière d'un tablier de séparation entre le compartiment moteur et l'habitacle du véhicule, depuis l'extrémité arrière 4 des brancards 3a, 3b vers les longerons latéraux 1a, 1b qui sont respectivement affectés aux interfaces de jonction 5a, 5b.

Les interfaces de jonction 5a, 5b sont plus ou moins inclinées par rapport au plan de roulage du véhicule selon la configuration du châssis 1, notamment selon l'écart longitudinal et/ou transversal de séparation entre les extrémités arrière 4 des brancards 3a, 3b et la zone de fixation des interfaces de jonction 5a, 5b aux longerons latéraux 1a, 1b qui leurs sont respectivement affectés.

Sur les figures 2 et 3, et pour chacune des interfaces de jonction 5a, 5b, l'interface de jonction 5a, 5b relie l'extrémité arrière 4 du brancard 3a, 3b au longeron latéral 1a, 1b via le premier organe de jonction 7a. Une extrémité avant 8a d'extension longitudinale du premier organe de jonction 7a est fixée longitudinalement à l'extrémité arrière 4 du brancard 3a, 3b, via une première patte de fixation 9a que comporte le premier organe de jonction 7a. Une extrémité arrière 8b d'extension longitudinale du premier organe de jonction 7a est fixée transversalement au longeron latéral 1a, 1b via une deuxième patte de fixation 9b que comporte le premier organe de jonction 7a.

Plus particulièrement visible sur les figures 4, 5 et 7, le premier organe de jonction 7a est aussi fixé verticalement sous le longeron latéral 1a, 1b via une aile de fixation 10 que comporte le premier organe de jonction 7a. Ladite aile de fixation 10 présente une extension transversale et s'étend longitudinalement le long d'un bord 11 d'accostage du premier organe de jonction 7a qui est transversalement plaqué contre le longeron latéral 1a, 1b comme représenté sur les figures 1 et 3.

Plus particulièrement visible sur les figures 4 à 7, le premier organe de jonction 7a présente une partie médiane 8c qui est interposée entre l'extrémité avant 8a et l'extrémité arrière 8b du premier organe de jonction 7a. Ladite partie médiane 8c présente une double inflexion formée entre l'extrémité avant 8a et l'extrémité arrière 8b du premier organe de jonction 7a, qui ménage un décalage transversal entre l'extrémité avant 8a et l'extrémité arrière 8b du premier organe de jonction 7a. Un tel décalage transversal procure le raccordement transversal, via le premier organe de jonction 7a, entre l'extrémité arrière 4 du brancard 3a, 3b et le longeron latéral 1a, 1b.

Le premier organe de jonction 7a comprend une première coque 12a qui s'étend longitudinalement et transversalement. La première coque 12a ménage un fond 13a rehaussé de parois de bordure 14a, 14b qui s'étendent verticalement depuis le fond 13a de la première coque 12a vers le haut du châssis 1, dont une première paroi de bordure 14a et une deuxième paroi de bordure 14b.

Ledit bord 11 d'accostage est ménagé par le fond 13a de la première coque 12a, en s'étendant entre les extrémités transversales extérieures E1 de la première paroi de bordure 14a et de la deuxième paroi de bordure 14b, qui sont orientées vers le longeron latéral 1a, 1b. La première patte de fixation 9a s'étend transversalement et en élévation entre les extrémités avant de la première paroi de bordure 14a et de la deuxième paroi de bordure 14b. La deuxième patte de fixation 9b est ménagée par une extension longitudinale de la deuxième paroi de bordure 14b à son extrémité arrière.

Le premier organe de jonction 7a intègre un premier organe de renfort 15a qui est logé à l'intérieur de la première coque 12a pour son renforcement à l'encontre de sa déformation en cas de choc frontal supporté par le châssis 1. Le premier organe de renfort 15a relie entre elles l'extrémité avant 8a et l'extrémité arrière 8b du premier organe de jonction 7a,en s'étendant longitudinalement et transversalement. Le premier organe de renfort 15a occupe partiellement le volume intérieur de la première coque 12a en présentant une conformation en fuseau arqué suivant un plan transversal-longitudinal entre l'extrémité avant 8a et l'extrémité arrière 8b du premier organe de jonction 7a.

Plus particulièrement visible sur la figure 6, le premier organe de renfort 15a comprend divers composants issus de la matière de la première coque 12a et/ou fixés à la première coque 12a constitutive du premier organe de jonction 7a. Un premier composant est formé d'un premier profilé 16a, un deuxième composant est formé d'une aile de renfort 14b que comporte la première coque 12a et qui est constituée de ladite deuxième paroi de bordure 14b, et un troisième composant est formé d'un deuxième profilé 16b s'étendant transversalement et longitudinalement entre le premier profilé 16a et ladite aile de renfort 14b.

Le premier profilé 16a présente un profil en S et s'étend verticalement depuis le fond 13a de la première coque 12a auquel il est fixé. Le premier profilé 16a est orienté transversalement du côté extérieur E1 du châssis 1, ou autrement dit en direction du longeron latéral 1a, 1b auquel il est fixé. Le premier profilé 16a s'étend longitudinalement et transversalement depuis l'extrémité avant 8a du premier organe de jonction 7a et est accosté à son extrémité arrière contre l'aile de renfort 14b, à l'avant de la deuxième patte de fixation 9b.

L'aile de renfort 14b présente une extension verticale et est à bord supérieur rabattu, en étant issue de la matière constitutive de la première coque 12a. L'aile de renfort 14b s'étend à distance transversale variable du premier profilé 16a, en bordant la première coque 12a à son côté transversalement orienté vers le deuxième organe de jonction 7b, ou autrement dit à son côté transversalement orienté du côté intérieur I1 du châssis 1 ou en d'autres termes encore à son côté orienté transversalement à l'opposé du longeron latéral 1a, 1b auquel l'interface de jonction 5a, 5b est fixée. L'aile de renfort 14b et le premier profilé 16a délimitent entre eux la conformation du premier organe de renfort 15a en fuseau arqué.

Le deuxième profilé 16b est transversalement interfacé entre le premier profilé 16a et l'aile de renfort 14b. Le deuxième profilé 16b présente un profil en U en étant fixé au premier profilé 16a et à l'aile de renfort 14b via les branches du profil en U du deuxième profilé 16b. Le deuxième profilé 16b s'étend longitudinalement au moins partiellement à l'intérieur du volume délimité entre le premier profilé 16a et l'aile de renfort 14b, en prenant des appuis antagonistes transversaux contre le premier profilé 16a et l'aile de renfort 14b.

Le deuxième organe de jonction 7b est formé d'une deuxième coque 12b qui est renforcée par un deuxième organe de renfort 15b qu'elle loge. La deuxième coque 12b s'étend longitudinalement et transversalement en prolongement, du côté intérieur I1 du châssis, de la première coque 12a 1. La deuxième coque 12b comporte un fond 13b rehaussé de parois de bordure qui s'étendent verticalement depuis le fond 13b de la deuxième coque 12b vers le haut du châssis 1.

La paroi de bordure de la deuxième coque 12b à sa face orientée vers le premier organe de jonction 7a est ménagée par l'aile de renfort 14b que comporte le premier organe de jonction 7a, ou autrement dit est ménagée par la deuxième paroi de bordure 14b que comporte la première coque 12a.

L'aile de renfort 14b forme ainsi une cloison de séparation entre le volume intérieur de la première coque 12a et le volume intérieur de la deuxième coque 12b. L'aile de renfort 14b participe aussi au renforcement de la deuxième coque 12b en cas de choc frontal supporté par le véhicule, notamment en cas de choc frontal-latéral appliqué à l'avant du véhicule. Le deuxième organe de renfort 15b logé à l'intérieur de la deuxième coque 12b présente une conformation en paliers suivant l'extension verticale de la deuxième coque 12b, chacun des paliers étant individuellement fixé au fond 13b que comporte la deuxième coque 12b.

Le premier organe de jonction 7a et le deuxième organe de jonction 7b sont chacun pourvus d'une semelle 17a, 17b de plaquage et/ou de fixation des organes de jonction sous la plateforme 2, tel qu'illustré sur la figure 1. Lesdites semelles 17a, 17b sont au moins en partie formées par des retours que comportent l'une au moins des parois de bordure 14a, 14b de la première coque 12a et de la deuxième coque 12b. La semelle 17a du premier organe de jonction 7a est ménagée au moins par le rabat du bord supérieur de l'aile de renfort 14b et par une aile du premier profilé 16a ménagée par la conformation en S de son profil. La semelle 17b du deuxième organe de jonction 7b est ménagée en périphérie supérieure et au moins partiellement au pourtour des parois de bordure de la deuxième coque constitutive du deuxième organe de jonction 7b.

Sur la figure 1, le soubassement du véhicule est pourvu d'un tunnel 18 longitudinal de renfort qui s'étend suivant ledit axe longitudinal A1 transversalement médian et qui s'étend verticalement en saillie vers le haut du châssis 1. Le tunnel 18 ménage un sabot 19 auquel les interfaces de jonction 5a, 5b sont accostées transversalement via les deuxièmes organes de jonction 7b qu'elles comportent, respectivement de part et d'autre du sabot 19 suivant son extension transversale.

## Revendications

1. Dispositif de fixation sur un châssis (1) de véhicule automobile, de l'extrémité arrière (4) de brancards (3a, 3b) droit et gauche que comporte un berceau moteur monté sur le châssis (1), le dispositif de fixation comportant pour chacun des brancards (3a, 3b) une interface de jonction (5a, 5b) comprenant au moins un premier organe de jonction (7a) fixé d'une part longitudinalement (L1) à l'extrémité arrière (4) du brancard (3a, 3b) via une extrémité avant (8a) que comporte le premier organe de jonction (7a), et d'autre part transversalement (T1) à un longeron latéral (1a, 1b) constitutif du châssis (1) via une extrémité arrière (8b) que comporte le premier organe de jonction (7a), ledit premier organe de jonction (7a) logeant au moins un premier organe de renfort (15a) reliant entre elles l'extrémité avant (8a) et l'extrémité arrière (8b) du premier organe de jonction (7a), ledit premier organe de renfort (15a) étant transversalement (T1) étendu en étant arqué suivant un plan transversal-longitudinal (T1-L1) entre l'extrémité avant (8a) et l'extrémité arrière (8b) du premier organe de jonction (7a), **caractérisé en ce que** le premier organe de renfort (15a) comprend :
- un premier profilé (16a) d'extension verticale (V1) fixé au premier organe de jonction (7a) en s'étendant entre l'extrémité avant (8a) et l'extrémité arrière (8b) du premier organe de jonction (7a),
- ) une aile de renfort (14b) d'extension verticale (V1) et à bord supérieur rabattu qui est issue de la matière du premier organe de jonction (7a), ladite aile de renfort (14b) s'étendant à distance transversale (T1) dudit premier profilé (16a) et en bordure du premier organe de jonction (7a) à son bord qui est transversalement (T1) orienté du côté intérieur (I1) du châssis (1).
- ) un deuxième profilé (16b) s'étendant longitudinalement (L1) au moins partiellement à l'intérieur du volume délimité entre ledit premier profilé (16a) et ladite aile de renfort (14b), le deuxième profilé (16b) étant fixé en appuis transversalement (T1) antagonistes contre ledit premier profilé (16a) et ladite aile de renfort (14b).

2. Dispositif de fixation selon la revendication 1, **caractérisé en ce que** le premier organe de jonction (7a) s'étend en contrebas du brancard (3a, 3b) et présente une partie médiane (8c) interposée entre l'extrémité avant (8a) et l'extrémité arrière (8b) du premier organe de jonction (7a), ladite partie médiane (8c) ménageant un décalage transversal (T1) entre l'extrémité avant (8a) et l'extrémité arrière (8b) du premier organe de jonction (7a).

3. Dispositif de fixation selon l'une quelconque des revendications 1 à 2, **caractérisé** :
**en ce que** le premier organe de jonction (7a) comprend une première coque (12a) qui comporte un fond (13a) rehaussé de parois de bordure d'extension verticale (V1), le fond (13a) de la première coque (12a) étant délimité entre une première paroi de bordure (14a) et une deuxième paroi de bordure (14b),
**en ce qu'**un bord (11) du fond (13a) de la première coque (12a) est délimité entre la première paroi de bordure (14a) et la deuxième paroi de bordure (14b), est transversalement (T1) plaqué contre le longeron latéral (1a, 1b) et est longitudinalement (L1) bordé d'une aile de fixation (10) du premier organe de jonction (7a) verticalement (V1) sous le longeron latéral (1a, 1b),
**en ce qu'**une première patte de fixation (9a) du premier organe de jonction (7a) à l'extrémité arrière (4) du brancard (3a, 3b) est ménagée à l'extrémité avant (8a) du premier organe de jonction (7a) entre la première paroi de bordure (14a) et la deuxième paroi de bordure (14b), et
**en ce que** la deuxième paroi de bordure (14b) est munie d'une deuxième patte de fixation (9b) du premier organe de jonction (7a) à son extrémité arrière (8b), transversalement (T1) contre une face latérale du longeron latéral (1a, 1b).

4. Dispositif de fixation selon la revendication 3, **caractérisé** :
**en ce que** l'aile de renfort (14b) est constituée de ladite deuxième paroi de bordure que comprend la première coque (12a), et
**en ce que** ledit premier profilé (16a) constitutif du premier organe de renfort (15a) est accosté à son extrémité arrière contre ladite aile de renfort (14b), à l'avant de la deuxième patte de fixation (9b).

5. Dispositif de fixation selon l'une quelconque des revendications 1 à 4, **caractérisé en ce que** les interfaces de jonction (5a, 5b) respectivement affectées aux brancards (3a, 3b) comprennent en outre chacune un deuxième organe de jonction (7b) qui est transversalement (T1) interfacé entre le premier organe de jonction (7a) et un sabot (19) transversalement (T1) médian équipant le châssis (1), les deuxièmes organes de jonction (7b) respectifs des interfaces de jonction (5a, 5b) étant transversalement (T1) accostés respectivement de part et d'autre du sabot (19).

6. Dispositif de fixation selon la revendication 5, **caractérisé en ce que** pour chacune des interfaces de jonction (5a, 5b), le premier organe de jonction (7a) et le deuxième organe de jonction (7b) sont transversalement (T1) aboutés l'un contre l'autre en formant conjointement un corps monobloc.

7. Dispositif de fixation selon l'une quelconque des revendications 1 à 4 et selon la revendication 6, **caractérisé en ce que** le deuxième organe de jonction (7b) est agencé en une deuxième coque (12b) d'extension longitudinale (L1) et transversale (T1) logeant un deuxième organe de renfort (15b), ladite aile de renfort (14b) ménageant une cloison de séparation entre le volume intérieur de la première coque (12a) et le volume intérieur de la deuxième coque (12b).

8. Véhicule automobile comportant un châssis (1) sur lequel sont fixées les extrémités arrière (4) respectives de brancards (3a, 3b) droit et gauche que comporte un berceau moteur monté sur le châssis (1), **caractérisé en ce que** les extrémités arrière (4) des brancards (3a, 3b) sont fixées au châssis (1) via un dispositif de fixation selon l'une quelconque des revendications 1 à 7.

## Patentansprüche

1. Vorrichtung zur Befestigung des hinteren Endes (4) von rechten und linken Tragstrukturen (3a, 3b) an einem Kraftfahrzeugrahmen (1), wobei die Vorrichtung zur Befestigung jeder der Tragstrukturen (3a, 3b) eine Verbindungsschnittstelle (5a, 5b) aufweist, die wenigstens ein erstes Verbindungselement (7a) aufweist, das einerseits in Längsrichtung (L1) durch ein vorderes Ende (8a) mit dem ersten Verbindungselement (7a) am hinteren Ende (4) der Tragstruktur (3a, 3b) und andererseits in Querrichtung (T1) durch ein hinteres Ende befestigt ist (8b) mit dem ersten Verbindungselement (7a) an einem Seitenträger (1a, 1b), der den Rahmen (1) bildet, wobei das erste Verbindungselement (7a) mindestens ein erstes Verstärkungselement (15a) aufnimmt, das das vordere Ende (8a) und das hintere Ende (8b) des ersten Verbindungselements (7a) verbindet, wobei das erste Verstärkungselement (15a) in einer Längsquerebene (T1-L1) zwischen dem vorderen Ende (8a) und dem hinteren Ende (8b) des ersten Verbindungselements (7a) quer (T1) verläuft, **dadurch gekennzeichnet, dass** Das erste Verstärkungselement (15a) umfasst:
- ) ein erstes vertikales Profil (16a) (V1), das an dem ersten Verbindungselement (7a) befestigt ist und sich zwischen dem vorderen Ende (8a) und dem hinteren Ende (8b) des ersten Verbindungselements (7a) erstreckt,
- ) einem vertikal verlaufenden Verstärkungsschenkel (14b) (V1) mit einem umgeklappten oberen Rand, der aus dem Material des ersten Verbindungselements (7a) hergestellt ist, wobei sich der Verstärkungsschenkel (14b) in einem Querabstand (T1) des ersten Profils (16a) und am Rand des ersten Verbindungselements (7a) an seinem quer (T1) zum Inneren (11) des Rahmens (1) gerichteten Rand erstreckt.
- ) ein zweites Profil (16b), das sich in Längsrichtung (L1) zumindest teilweise innerhalb des zwischen dem ersten Profil (16a) und dem Verstärkungsschenkel (14b) begrenzten Volumens erstreckt, wobei das zweite Profil (16b) quer in gegenüberliegenden Auflagen (T1) am ersten Profil (16a) und am Verstärkungsschenkel (14b) befestigt ist.

2. Befestigungsvorrichtung nach Anspruch 1, **dadurch gekennzeichnet, dass** sich das erste Verbindungselement (7a) unterhalb der Tragleiste (3a, 3b) erstreckt und einen Mittelabschnitt (8c) aufweist, der zwischen dem vorderen Ende (8a) und dem hinteren Ende (8b) des ersten Verbindungselements (7a) angeordnet ist, wobei der Mittelabschnitt (8c) einen Querversatz (T1) zwischen dem vorderen Ende (8a) und dem hinteren Ende (8b) des ersten Verbindungselements (7a) bildet.

3. Befestigungsvorrichtung nach einem der Ansprüche 1 bis 2, **dadurch gekennzeichnet, dass**
**dadurch gekennzeichnet, dass** das erste Verbindungsorgan (7a) eine erste Schale (12a) umfasst, die einen Boden (13a) aufweist, der von sich vertikal erstreckenden Randwänden (V1) erhöht ist, wobei der Boden (13a) der ersten Schale (12a) zwischen einer ersten Randwand (14a) und einer zweiten Randwand (14b) begrenzt ist,
**dadurch gekennzeichnet, dass** ein Rand (11) des Bodens (13a) der ersten Schale (12a) zwischen der ersten Randwand (14a) und der zweiten Randwand (14b) begrenzt ist, quer (T1) am Längsträger (1a, 1b) anliegt und in Längsrichtung (L1) durch einen Befestigungsschenkel (10) des ersten Verbindungsorgans (7a) vertikal (V1) unter dem Längsträger (1a, 1b) begrenzt ist,
eine erste Befestigungslasche (9a) des ersten Verbindungselementes (7a) am vorderen Ende (8a) des ersten Verbindungselementes (7a) zwischen der ersten Randwand (14a) und der zweiten Randwand (14b) am hinteren Ende (4) der Trägerleiste (3a, 3b) ausgebildet ist und
**dadurch gekennzeichnet, dass** die zweite Randwand (14b) an ihrem hinteren Ende (8b) quer (T1) gegen eine Seitenfläche des Seitenholms (1a, 1b) mit einer zweiten Befestigungslasche (9b) des ersten Verbindungselementes (7a) versehen ist.

4. Befestigungsvorrichtung nach Anspruch 3, **dadurch gekennzeichnet, dass**
**dadurch gekennzeichnet, dass** der Verstärkungsflügel (14b) durch die zweite Umfangswand gebildet ist, die die erste Schale (12a) umgibt, und
Das erste Profil (16a), das das erste Verstärkungsglied (15a) bildet, ist an seinem hinteren Ende vor der zweiten Befestigungslasche (9b) am Verstärkungsschenkel (14b) anliegt.

5. Befestigungsvorrichtung nach einem der Ansprüche 1 bis 4, **dadurch gekennzeichnet, dass** die Verbindungsschnittstellen (5a, 5b), die jeweils den Schenkeln (3a, 3b) zugeordnet sind, ferner jeweils ein zweites Verbindungselement (7b) umfassen, das quer (T1) zwischen dem ersten Verbindungselement (7a) und einem zentralen Querschuh (T1) montiert ist, der den Rahmen (1) ausstattet, wobei die jeweiligen zweiten Verbindungselemente (7b) der Verbindungsschnittstellen (5a, 5b) beiderseits des Schuhs (19) in Querrichtung aneinander anliegen (T1).

6. Befestigungsvorrichtung nach Anspruch 5, **dadurch gekennzeichnet, dass** für jede der Verbindungsschnittstellen (5a, 5b) das erste Verbindungselement (7a) und das zweite Verbindungselement (7b) in Querrichtung aneinander anliegen (T1) und zusammen einen einstückigen Körper bilden.

7. Befestigungsvorrichtung nach einem der Ansprüche 1 bis 4 und nach Anspruch 6,
**dadurch gekennzeichnet, dass** das zweite Verbindungselement (7b) in einer sich in Längsrichtung (L1) und quer (T1) erstreckenden zweiten Schale (12b) angeordnet ist, die ein zweites Verstärkungselement (15b) aufnimmt, wobei der Verstärkungsschenkel (14b) eine Trennwand zwischen dem Innenraum der ersten Schale (12a) und dem Innenraum der zweiten Schale (12b) bildet.

8. Kraftfahrzeug mit einem Rahmen (1), an dem die jeweiligen hinteren Enden (4) der rechten und linken Tragstrukturen (3a, 3b) befestigt sind, der einen am Rahmen (1) montierten Motorrahmen aufweist, **dadurch gekennzeichnet, dass** die hinteren Enden (4) der Tragstrukturen (3a, 3b) an dem Rahmen (1) mittels einer Befestigungsvorrichtung nach einem der Ansprüche 1 bis 7 befestigt sind.

## Claims

1. Device for fixing the rear end (4) of right and left bearing structures (3a, 3b) to a motor vehicle frame (1), the device for fixing each of the bearing structures (3a, 3b) having a connecting interface (5a, 5b) comprising at least one first connecting item (7a) fixed on the one hand in the longitudinal management (L1) by a front end (8 a) comprising the first connecting item (7 a) to the rear end (4) of the bearing structure (3a, 3b) and on the other hand in the transverse management (T1) by a rear end (8b) comprising the first connecting item (7a) on a lateral spar (1a, 1b) forming the frame (1), the first connecting item (7a) receiving at least one first reinforcing item (15a) connecting the front end (8a) and the rear end (8b) of the first connecting item (7a), the first reinforcing item (15a) being transverse (T1) in a longitudinal transverse drawing (T1-L1) between the front end (8 a) and the rear end (8b) of the first connecting item (7a), **characterised in that** the first reinforcing item (15a) comprises:
first vertical section (16a) (V1) fixed to the first connecting item (7a) and extending between the front end (8a) and the rear end (8b) of the first connecting item (7a),
a reinforcing wing (14b) (V1) extending vertically, with a top folded edge, which is realised from the material of the first connecting item (7a), the reinforcing wing (14b) extending at a transverse distance (T1) from the first section (16a) and at the edge of the first connecting item (7a) to the level of its edge directed transversely (T1) towards the inside (11) of the frame (1).
second section (16b) extending longitudinally (L1) at least partially inside the quantity delimited between the first section (16a) and the reinforcing branch (14b), the second section (16b) being fixed transversely in opposing supports (T1) to the first section (16a) and to the reinforcing branch (14b).

2. Fastening device according to claim 1, wherein the first connecting item (7a) extends below the support rod (3a, 3b) and has a central part (8c) arranged between the front end (8a) and the rear end (8b) of the first connecting item (7a), the central part (8c) forming a transverse offset (T1) between the front end (8a) and the rear end (8b) of the first connecting item (7a).

3. Fastening device according to one of Claims 1 to 2, **characterised in that characterised in that** the first connecting member (7a) comprises a first shell (12a) having a raised bottom (13a) of marginal walls (V1) extending vertically, the bottom (13a) of the first shell (12a) being delimited between a first marginal wall (14a) and a second marginal wall (14b),
wherein an edge (11) of the bottom (13a) of the first shell (12a) is delimited between the first marginal wall (14a) and the second marginal wall (14b), is pressed transversely (T1) against the spar (1a, 1b) and is delimited in the longitudinal management (L1) by a fixing branch (10) of the first connecting member (7a) vertically (V1) under the spar (1a, 1b),
first fixing lug (9 a) of the first connecting item (7 a) is formed at the front end (8 a) of the first connecting item (7 a) between the first marginal wall (14 a) and the second marginal wall (14 b) at the rear end (4) of the support rod (3 a, 3 b), and
wherein the second marginal wall (14b) is provided, at its rear end (8b), transversely (T1), against a lateral face of the lateral spar (1a, 1b), with a second fixing lug (9b) of the first connecting item (7a).

4. Fastening device according to claim 3, **characterised in that**
**characterised in that** the reinforcing wing (14b) is constituted by the second peripheral wall which surrounds the first shell (12a), and
The first section member (16a), which forms the first reinforcing member (15a), is pressed at its rear end against the reinforcing flange (14b), in front of the second fixing lug (9b).

5. Fastening device according to any one of Claims 1 to 4, **characterised in that** the connecting interfaces (5a, 5b) associated respectively with the branches (3a, 3b) also comprise respectively a second connecting item (7b) mounted transversely (T1) between the first connecting item (7a) and a transverse central shoe (T1) (19) fitted to the frame (1), the respective second connecting items (7b) of the connecting interfaces (5a, 5b) being in transverse abutment (T1) on either side of the shoe (19).

6. Fixing device according to claim 5, wherein, for each of the connecting interfaces (5a, 5b), the first connecting item (7a) and the second connecting item (7b) are in transverse abutment (T1) against each other, together forming a body of a single component.

7. Fastening device according to one of claims 1 to 4 and according to claim 6, wherein the second connecting item (7b) is arranged in a second shell (12b) extending longitudinally (L1) and transversely (T1) and receiving a second reinforcing item (15b), the reinforcing branch (14b) forming a partition between the internal volume of the first shell (12a) and the internal volume of the second shell (12b).

8. Motor vehicle comprising a frame (1) on which are fixed the respective rear ends (4) of the right and left bearing structures (3a, 3b) which has an engine frame mounted on the frame (1), wherein the rear ends (4) of the bearing structures (3a, 3b) are fixed to the frame (1) by means of a fixing device according to any one of claims 1 to 7.
